# EUROPÄISCHE PATENTANMELDUNG

(11) **EP 1 061 338 A1**
(43) Veröffentlichungstag der Anmeldung: **20.12.2000**
(21) Anmeldenummer: 00110709.3
(22) Anmeldetag: 19.05.2000
(51) Int. Cl.: G01C 21/18

(54) **Vorrichtung zum Raumlage-Stabilisieren von Sensoren in Fahrzeugen**

(30) Priorität: 18.06.1999 DE 19927932; 25.11.1999 DE 19956643
(71) Anmelder: EMT Ingenieurbüro für Elektro-Mechanische Technologien Dipl.-Ing. Hartmut Euer mbH, 82377 Penzberg (DE)
(72) Erfinder: Euer, Hartmut, Dipl.-Ing., 82393 Iffeldorf (DE); Wernicke, Joachim, Prof. Dr.-Ing., 14167 Berlin (DE)
(74) Vertreter: Volpert, Marcus, Dr.

(57) **Zusammenfassung**

Vorrichtung zum Raumlage-Stabilisieren von Sensoren, insbesondere abbildenden Sensoren, in Fahrzeugen.

Aus der Praxis sind raumlagestabilisierte Vorrichtungen bekannt, bei denen Raumlagesensoren die Raumlage einer Sensorplattform und eines Fahrzeuges ermitteln und Stellantriebe in einem Regelprozeß eventuelle Abweichungen der Ist-Raumlage von der Soll-Raumlage der Sensorplattform unverzüglich korrigieren. Die neue Vorrichtung soll einfacher aufgebaut sein und wirtschaftlicher arbeiten.

Erfindungsgemäß ist die Sensorplattform (4) schwerpunktnah als Schwerependel derart gelagert, daß sie sich in einem schwach stabilen, nahezu indifferenten Gleichgewicht befindet, wobei der allen drei rotatorischen Achsen (A, B, C) gemeinsame Angriffspunkt (5) der Drehlagerung (6) an der Sensorplattform (4) um ein geringes Maß (7) außerhalb, vorzugsweise oberhalb oder unterhalb des Schwerpunktes (8) der Sensorplattform (4) liegt.

Vorrichtung zum passiv-intertial Stabilisieren von Sensorplattformen in Fahrzeugen (3), vorzugsweise Fluggeräten.

## Beschreibung

Die Erfindung bezieht sich auf eine Vorrichtung zum Raumlage-Stabilisieren von Sensoren, insbesondere abbildenden Sensoren, in Fahrzeugen nach dem Oberbegriff des Patentanspruchs 1.

Eine derartige Vorrichtung ist aus der Praxis bekannt und wird vor allem in der Fahrzeugtechnik vielfältig eingesetzt. Die Vorrichtung kann einerseits als Träger von am geodätischen Referenzsystem orientierten Ortungssensoren, wie zum Beispiel Kreisel, Beschleunigungsmesser, dienen. Andererseits ermöglicht sie das Tragen von Sensoren als Nutzlast. Derartige Sensoren können beispielsweise Luftbildkameras sein. Das Fahrzeug kann in Form eines Luft-, Land-, See- oder Raumfahrzeugs ausgebildet sein. Vorzugsweise ist das Fahrzeug ein Fluggerät.

Damit die Sensoren ihre Aufgabe erfüllen können, sind sie in ihrer Raumlage unabhängig von der Bewegung des Fahrzeugs ausgerichtet, so daß sie beispielsweise in Form einer Luftbildkamera ungeachtet der Bahnbewegungen des Fluggerätes am Boden befindliche Objekte im Blick behalten können. Ferner können derartige Sensoren kontrolliert über am Boden befindliche Objekte geschwenkt werden.

Bei der aus der Praxis bekannten Vorrichtung ist die Sensorplattform in ihrem Schwerpunkt dreiachsig frei drehbar am Fluggerät aufgehängt. Raumlagesensoren ermitteln ständig die jeweilige Lage der Sensorplattform und des Fahrzeugs; Stellantriebe korrigieren in einem schnell durchgeführten Regelprozess Abweichungen der Ist-Lage von der Soll-Lage. Eine derartige Vorrichtung hat den Nachteil eines hohen Kosten- und Gewichtsaufwandes. Es ist erforderlich, die tragenden Kardanrahmen und -lager verbindungssteif auszuführen, die Meßfehler der Raumlagesensoren kleiner als die angestrebten Raumlagetoleranzen auszubilden und die Stellantriebe mit hoher Präzision zu fertigen und derart auszubilden, daß deren Grenz-Stellfrequenzen über das praktisch auftretende Störfrequenzspektrum hinausreichen.

Für kleine Fahrzeuge, wie zum Beispiel unbemannte Fluggeräte, ist die bekannte Vorrichtung nicht geeignet. Diese überwiegend aus Kunststoff gefertigten Leichtfahrzeuge haben eine Fahrzeugzelle, welche in einem Umfang deformierbar ist, der über die angestrebten Raumlagetoleranzen hinausreicht. Die Annahme "Fahrzeugzelle kann als starrer Körper angenommen werden" trifft also bei derart deformierbaren Fahrzeugzellen nicht zu. Dadurch erhöht sich der Meß- und Regelaufwand für die aktive Lagerregelung der Sensorplattform erheblich.

Der Erfindung liegt die Aufgabe zugrunde, eine Vorrichtung der eingangs erwähnten Art zu schaffen, welche mit geringerem Aufwand und damit wirtschaftlicher handhabbar ist.

Diese Aufgabe wird erfindungsgemäß durch eine Vorrichtung mit den Merkmalen des Patentanspruchs 1 gelöst.

Vorteilhafte Weiterbildungen der Erfindung sind Gegenstand der Unteransprüche.

Erfindungsgemäß ist die Sensorplattform schwerpunktnah als Schwerependel derart gelagert, daß sie sich in einem schwach stabilen, nahezu indifferenten Gleichgewicht befindet. Dadurch schwingt die Sensorplattform relativ langsam und träge, wobei die Frequenzen deutlich unter 1 Hz liegen. Das erfindungsgemäße System ist daher relativ träge und befindet sich im Ruhezustand in einer definierten Lage zur Vertikalen. Die erfindungsgemäße Lagerung verhindert, daß sich Rotationen und Translationen des Fahrzeugs auf die Lage der Sensorplattform und damit auf diejenige des wenigstens einen Sensors auswirken. Die erfindungsgemäße Lagerung verhindert die Übertragung von Rotationsbewegungen des Fahrzeugs, wie zum Beispiel des Fluggeräts, auf die Sensorplattform. Translationsbewegungen, wie zum Beispiel Beschleunigungen des Fahrzeuges, wirken sich nur in vernachlässigbarem Umfang auf die Sensorplattform aus, da durch die schwerpunktnahe Lagerung Trägheitskräfte infolge Fahrzeugbeschleunigung nur mit einem sehr kleinen Hebelarm auf die Sensorplattform wirken, so daß ein wirksames Drehmoment zum Verstellen der Lage der Sensorplattform nicht zustande kommt.

Gemäß einer vorteilhaften Weiterbildung liegt der allen drei rotatorischen Achsen gemeinsame Angriffspunkt der Drehlagerung an der Sensorplattform um ein geringes Maß außerhalb, vorzugsweise oberhalb oder unterhalb, des Schwerpunktes der Sensorplattform, wodurch sichergestellt ist, daß sich die erfindungsgemäße Vorrichtung als physikalisches Pendel verhält.

Gemäß einer vorteilhaften Weiterbildung der Erfindung ist die dreiachsige Drehlagerung der Sensorplattform als Innenrahmensystem in Form eines zentralen Gelenks, vorzugsweise eines Kardan- oder Kugelgelenks, oder als Außenrahmensystem in Form einer außen um die Sensorplattform herum angeordneten Kardanaufhängung ausgebildet. Letztere hat den konstruktiven Vorteil, daß das Bauvolumen um den Schwerpunkt des Systems uneingeschränkt für die Unterbringung der Sensorplattform nutzbar ist. Daraus ergibt sich eine kompakte Bauform der erfindungsgemäßen Vorrichtung.

Gemäß einer Weiterbildung der Erfindung hat die Sensorplattform eine rotierende, rotationssymmetrische Schwungmasse, deren Rotationsachse eine konstante Lage in bezug auf die Sensorplattform aufweist. Durch die rotierende Schwungmasse ist das Trägheitsmoment der Sensorplattform gewissermaßen künstlich erhöht. Diese Erhöhung des Trägheitsmomentes bewirkt eine höhere Steifigkeit der Sensorplattform bei gleicher Masse. Dadurch ist die Raumlagedrift der Sensorplattform infolge der Rest-Störmomente vermindert.

Gemäß einer anderen Weiterbildung der Erfindung sind zum Herbeiführen oder Kompensieren von Drehbewegungen der Sensorplattform um eine oder mehrere der drei Achsen Momentengeber vorgesehen, die im Ruhezustand keine Drehmomente auf die Sensorplattform ausüben. Im Vergleich zu den bei der herkömmlichen Vorrichtung verwendeten Stellantrieben können die bei der erfindungsgemäßen Vorrichtung verwendeten Momentengeber relativ einfach ausgebildet und damit kostengünstig herstellbar sein. Dies ist auch darauf zurückzuführen, daß die letztgenannten Momentengeber anders als die Stellantriebe bei einer herkömmlichen Vorrichtung relativ lansam ansprechend ausgebildet sein können.

Vorteilhafterweise sind zur Messung der Relativlage der Sensorplattform gegenüber dem Fahrzeug Winkelsensoren vorgesehen, wobei vorzugsweise Momentengeber und Winkelsensoren berührungsfrei, insbesondere elektrodynamisch, arbeitend ausgebildet sind. Dadurch ist sichergestellt, daß Momentengeber und Winkelsensoren nicht ihrerseits Störmomente auf die Sensorplattform einbringen.

Gemäß einer Weiterbildung der Erfindung sind die Momentengeber jeweils als elektromagnetisches System, vorzugsweise mit am Fahrzeug befestigter, etwa kreisringsegmentförmiger Elektromagnetreihe und dieser gegenüberliegendem, an der Sensorplattform befestigtem, weichmagnetischem Material, ausgebildet, wobei vorzugsweise die Momentengeber über die Messung der elektromagnetischen Induktivitäten im zeitlichen Wechsel auch als elektromagnetische Winkelsensoren einsetzbar sind. Das weichmagnetische Material gewährleistet im stromlosen Zustand der Elektromagnete einen stellmomentfreien Zustand des Momentengebers. Ein derartiger Momentengeber ist also im Sinne einer Doppelwirkung sowohl zum Aufbringen eines Momentes auf die Sensorplattform als auch zum Bestimmen der jeweiligen Lage der Sensorplattform relativ zum Fahrzeug einsetzbar. Die Nähe des ferromagnetischen Materials erhöht nämlich die Induktivität des nächstbenachbarten Elektromagneten bzw. der nächstbenachbarten Elektromagnetspule, so daß durch die Induktivitätsmessung der einzelnen Elektromagneten die relative Raumlage der Sensorplattform relativ zum Fahrzeug ermittelt werden kann.

Gemäß einer anderen Weiterbildung der Erfindung sind die Momentengeber als Kombination aus Stellungsgebern und elastischen Kopplungselementen ausgebildet. Die Stellungsgeber können beispielsweise als Positionsservomotoren, sogenannte Positionsservos, auf einfache Weise ausgebildet sein. Auch die Kopplungselemente lassen sich beispielsweise über Stellhebel und elastische Züge preiswert und zuverlässig herstellen. Derartige elastische Kopplungselemente können somit auf einfache Weise den Momentenwert Null ausüben. Angesichts der sehr niedrigen Eigenfrequenzen der Pendelbewegungen der Sensorplattform sind an den Frequenzgang derartiger Regelkreise keine besonderen Ansprüche zu stellen, so daß, wie zuvor erwähnt, auch einfache Positionsservos zum Einsatz kommen können.

Vorteilhafterweise sind an der Sensorplattform Raumlage- und Winkelgeschwindigkeitssensoren befestigt. Diese dienen als Istwert-Meßgeber für die Raumlage bzw. die Winkelgeschwindigkeit. Diese Ausbildung hat den Vorteil, daß Meßfehlerbeiträge der Winkelstellungsabgriffe sowie der Messung der Raumlage der Sensorplattform infolge einer möglichen Durchbiegung des Fahrzeugs nicht auftreten können.

Gemäß einer bevorzugten Weiterbildung der Erfindung weist die Kardanaufhängung mehrere Kardanrahmen und ein Drehlager auf, mit dessen Hilfe die Kardanrahmen am Fahrzeug befestigt sind, wobei vorzugsweise die Kardanaufhängung als zusätzliches Schwerependel ausgebildet ist und der Aufhängungspunkt des zusätzlichen Schwerependels über ein dreiachsiges Dämpfungselement mit dem Fahrzeug verbunden ist. Dadurch pendelt der gemeinsame Schwerpunkt von Sensorplattform und Kardanaufhängung um die Richtung des wirksamen Schwerevektors unter dem Aufhängungspunkt am Fahrzeug. In Ruhe oder in geradliniggleichförmiger Bewegung des Fahrzeuges weist dieser Vektor parallel zur Vertikalen. Bei beschleunigter Bewegung des Fahrzeuges, so zum Beispiel beim Kurvenflug eines Fluggerätes, weist der Vektor in Richtung der Resultierenden aus Erdbeschleunigung, Zentrifugalbeschleunigung und einer eventuell antriebsbedingten Bahnbeschleunigung oder - verzögerung. Da die Raumrichtung des Schwerevektors also aus der Bahnbewegung des Fahrzeuges bekannt ist, kann sie unmittelbar als Raumlagereferenz für die Vertikale dienen. Vorteilhaft ist dabei, daß eine Abhängigkeit der Raumlagereferenz von einer möglichen Verbiegung des Fahrzeuges bzw. der Fahrzeugzelle eliminiert ist. Letztlich wird durch das zusätzliche Schwerependel eine kreiselfreie Lagereferenz gewonnen. Das Dämpfungselement ermöglicht einerseits ein Dämpfen von Pendelschwingungen der Kardanaufhängung relativ zur Sensorplattform, andererseits ein Abdämpfen von Vibrationen von dem Fahrzeug auf die Kardanaufhängung und damit auf die Sensorplattform.

Ausführungsbeispiele des Erfindungsgegenstandes werden nachfolgend an Hand der Zeichnung näher erläutert. Es zeigen:
- Fig. 1: eine schematische, teilweise perspektivische Ansicht einer Vorrichtung zum Raumlagestabilisieren von Sensoren in Fahrzeugen gemäß einer ersten, als Innenrahmensystem ausgebildeten Ausführungsform;
- Fig. 2: eine schematische, perspektivische Ansicht eines elektromagnetischen Systems zum Messen der Winkelstellung der Sensorplattform und zum Erzeugen von Stellmomenten; und
- Fig. 3: eine schematische, perspektivische Ansicht einer Vorrichtung zum Raumlage-Stabilisieren von Sensoren in Fahrzeugen gemäß einer zweiten, als Außenrahmensystem ausgebildeten Ausführungsform.

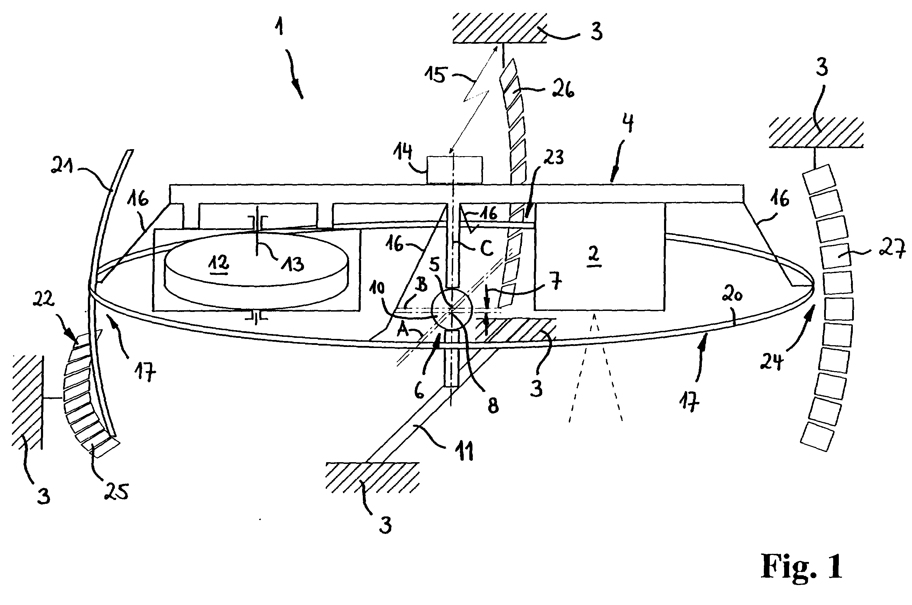

Eine Vorrichtung 1 zum Raumlage-Stabilisieren von Sensoren 2, insbesondere abbildenden Sensoren, in Fahrzeugen 3 ist schematisch in einer perspektivischen Ansicht in Fig. 1 gemäß einer ersten, als Innenrahmensystem ausgebildeten Ausführungsform der Erfindung dargestellt.

Der oder die Sensoren 2 sind beispielsweise als Luftbildkamera ausgebildet. Das Fahrzeug 3, das in Fig. 1 lediglich teilweise angedeutet ist, kann als Fluggerät oder auch als Land- oder Seefahrzeug ausgebildet sein.

Die Vorrichtung 1 weist eine als starrer Körper ausgebildete Sensorplattform 4 auf, welche den Sensor 2 trägt und frei um alle drei, jeweils einen Winkel von 90° einschließenden, rotatorischen Achsen A, B und C drehbar gelagert ist. Diese Lagerung wird nachfolgend dreiachsige Drehlagerung genannt.

In Fig. 1 ist ein typischer Anwendungsfall der erfindungsgemäßen Vorrichtung gezeigt, bei dem die Sensorplattform 4 in etwa horizontaler Lage stabilisiert und um die genannten drei rotatorischen Achsen A, B, C schwenkbar ist, um mit dem Sensor 2 in Form einer Luftbildkamera im Überflug Bodenbereiche abzutasten.

Die Sensorplattform 4 ist gemäß Fig. 1 in der Art eines länglichen Trägers ausgebildet und schwerpunktnah als Schwerependel derart gelagert, daß sie sich in einem schwach stabilen, nahezu indifferenten Gleichgewicht befindet. Dies ist darauf zurückzuführen, daß der allen drei rotatorischen Achsen A, B und C gemeinsame Angriffspunkt 5 der Drehlagerung 6 an der Sensorplattform 4 um ein geringes Maß 7 außerhalb des Schwerpunktes 8 der Sensorplattform 4 liegt. In Fig. 1 ist der gemeinsame Angriffspunkt 5 oberhalb des Schwerpunktes 8 vorgesehen.

Die dreiachsige Drehlagerung 6 der Sensorplattform 4 ist gemäß Fig. 1 als Innenrahmensystem in Form eines zentralen Gelenks 10 ausgebildet. Dieses Gelenk ist beispielsweise ein Kardan- oder Kugelgelenk, das über einen Trägerholm 11 fest mit dem Fahrzeug 3 verbunden ist.

An der Sensorplattform 4 ist neben dem Sensor 2, wie zum Beispiel eine oder mehrere Luftbildkameras, eine rotierende, rotationssymmetrische Schwungmasse 12, wie zum Beispiel ein Kreisel, befestigt. Die Rotationsachse 13 der Schwungmasse 12 weist in bezug auf die Sensorplattform 4 eine konstante Lage auf. Die Schwungmasse rotiert mit Hilfe eines nicht näher gezeigten Drehantriebs. Gemäß Fig. 1 befindet sich der wenigstens eine Sensor 2 auf der rechten, die Schwungmasse 12 hingeben auf der gegenüberliegenden, linken Seite der Sensorplattform 4.

Ferner ist auf der Oberseite der Sensorplattform 4 ein Datensender und -empfänger 14 zur berührungslosen optischen Übermittlung oder Funkübermittlung 15 von analogen oder digitalen Signalen bzw. Daten zwischen Sensorplattform 4 und Fahrzeug 3 montiert. Es ist klar, daß am Fahrzeug ebenfalls ein Datenempfänger und -sender vorgesehen ist (nicht gezeigt), der mit dem Datensender und -empfänger 14 kommuniziert.

Ferner ist an der Sensorplattform 4 über Halterungen 16 ferromagnetisches Material 17 in Form eines die Sensorplattform 4 umgebenden Kreisrings 20 und in Form eines in Fig. 1 auf der linken Seite angeordneten Kreisringsegmentes 21 vorgesehen.

Wie zuvor erwähnt, ist das Gelenk 10 derart positioniert, daß sein Angriffspunkt 5 um das geringe Maß 7, welches auf nicht näher gezeigte Weise einstellbar ist, oberhalb des Schwerpunktes 8 der Sensorplattform 4 liegt. Die Sensorplattform bildet daher ein physikalisches Pendel mit schwacher Gewichtsstabilität, wobei eine geringfügige Absenkung des Angriffspunktes 5 des zentralen Gelenkes 10 zu einem indifferenten Gleichgewicht führen würde. Auf Grund der erfindungsgemäßen Ausbildung der Drehlagerung 6 können weder rotatorische, noch translatorische Bewegungen des Fahrzeuges 3 und damit des Trägerholmes 11 nennenswerte Drehmomente auf die Sensorplattform 4 ausüben, wodurch die Sensorplattform und damit der Sensor 2 passiv-inertial stabilisiert ist.

Die Stromzuführung vom Fahrzeug 3 zur Sensorplattform 4 erfolgt gemäß Fig. 1 über das zentrale Gelenk 10, beispielsweise mittels nicht näher gezeigter, dünner, hochflexibler Leitungen oder über Schleifringe oder in einer Kombination der beiden letztgenannten Techniken. Es ist auch eine berührungsfreie, induktive Leistungsübertragung möglich.

Zum Herbeiführen oder Kompensieren von Drehbewegungen der Sensorplattform 4 sind um eine oder mehrere der drei rotatorischen Achsen A, B und C, auch Nick-, Roll- und Gierachsen genannt, Momentengeber 22 - 24 vorgesehen, die im Ruhezustand keine Drehmomente auf die Sensorplattform 4 ausüben. Diese Momentengeber sind gebildet durch elektromagnetische Systeme, welche jeweils eine etwa kreisringsegmentförmige Elektromagnetenreihe 25, 26, 27 mit dem gegenüberliegenden, weichmagnetischen Material 17 in Form des Kreisrings 20 bzw. des Kreissegmentes 21 aufweisen. Damit steht jede Reihe 25 - 27 von Elektromagneten in ihrem Magnetfeldbereich einem mit einer Drehbewegung an der Reihe entlang beweglichen, schmalen Stück aus ferromagnetischem Material gegenüber. Im einzelnen sind dies für die Nickbewegung (Drehung um die Achse A) die Elektromagnetenreihe 27 und der Kreisring 20 aus ferromagnetischem Material 17, für die Rollbewegung (Drehung um die Achse B) die Elektromagnetenreihe 26 und der Magnetring 20 aus ferromagnetischem Material 17 und für die Gierbewegung (Drehung um die vertikale Achse C) die Elektromagnetenreihe 25 und das Kreisringsegment 21 aus ferromagnetischem Material 17.

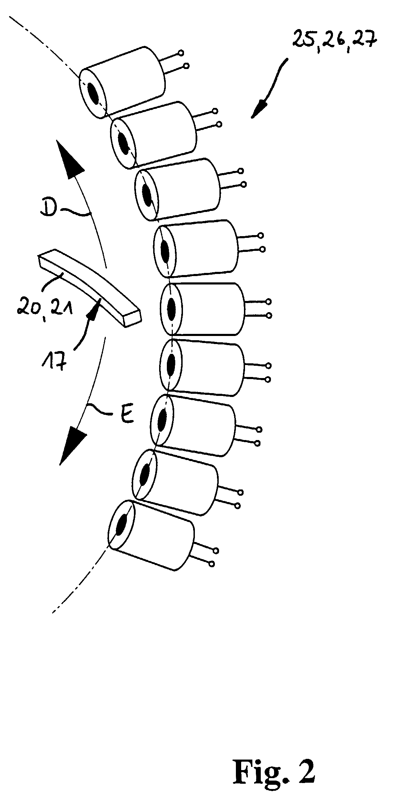

Eine derartige Anordnung ist beispielhaft in Fig. 2 in einer vergrößerten Darstellung gezeigt, wobei die Schwenk- oder Drehbewegung des Kreisrings 20 bzw. des Kreisringsegmentes 21 aus ferromagnetischem Material 17 entlang der Pfeile D und E angedeutet ist.

Bei einem Stromfluß durch einen der Elektromagnete der Elektromagnetenreihe 25 - 27, welche Elektromagneten sich in einem ausreichend geringen Abstand zu dem elektromagnetischen Material 17 befinden, wirkt durch den oder die als Spule arbeitenden Elektromagneten auf das ferromagnetische Material 17 eine Zugkraft zu dem betreffenden Elektromagneten hin, die als Drehmoment an der Sensorplattform 4 angreift.

Durch fortlaufende Messung der Induktivitätswerte aller Elektromagneten in den genannten Elektromagnetenreihen 25 - 27 ist es möglich, die Stellung des Kreisrings 20 aus ferromagnetischem Material 17 und damit die Lage der Sensorplattform 4 zu ermitteln. Dies ist darauf zurückzuführen, daß die unmittelbar dem Kreisring bzw. dem Kreisringsegment gegenüberliegenden Elektromagneten durch die Nähe des ferromagnetischen Materials 17 eine erhöhte Induktivität aufweisen. Damit sind die Momentengeber 22 - 24 über die Messung der elektromagnetischen Induktivitäten im zeitlichen Wechsel auch als elektromagnetische Winkelsensoren einsetzbar. Es ist aber auch möglich, zur Messung der Relativlage der Sensorplattform 4 gegenüber dem Fahrzeug 3 separate Winkelsensoren (nicht näher gezeigt) vorzusehen.

Generell können die Momentengeber 22 - 24 elektromagnetisch, elektrodynamisch oder pneumatisch arbeitend ausgebildet sein. Winkelsensoren können elektromagnetisch oder optisch arbeitend ausgebildet sein. Es ist klar, daß die Stromzuführungsverbindungen sowie die Daten- oder Signalverbindungen zwischen dem Fahrzeug und der Sensorplattform weitestgehend kräfte- und momentenfrei ausgebildet sind. Momentengeber 22 - 24 und, sofern vorhanden, Winkelsensoren sind daher berührungsfrei, vorzugsfrei elektrodynamisch arbeitend ausgebildet.

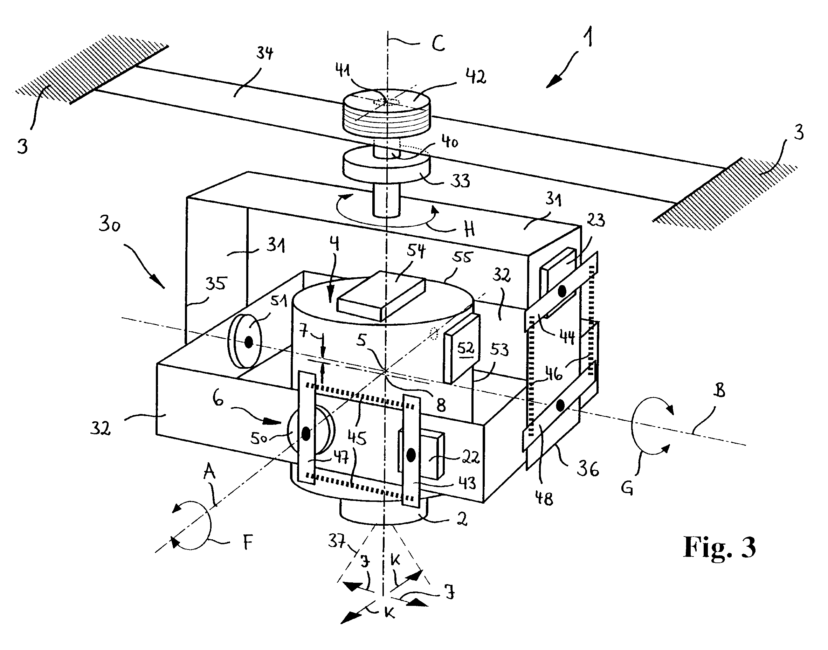

In Fig. 3 ist die erfindungsgemäße Vorrichtung 1 als Außenrahmensystem in Form einer außen um die Sensorplattform 4 herum angeordneten Kardanaufhängung 30 ausgebildet. Gemäß diesem Ausführungsbeispiel weist die Kardanaufhängung 30 zwei Kardanrahmen 31, 32 und ein Drehlager 33 auf; mit dessen Hilfe die Kardanrahmen 31 und 32 über einen Trägerholm 34 am Fahrzeug 3 befestigt sind.

Der äußere Kardanrahmen 31 ist gemäß Fig. 3 U-förmig mit nach unten weisender Öffnung ausgebildet. Der Kardanrahmen hat zwei Seitenschenkel 35, 36, an deren freien Enden der innere, zweite Kardanrahmen 32, welcher in Form eines Rechtecks gestaltet ist, um die rotatorische Achse B drehbar gelagert ist. Innerhalb des inneren Kardanrahmens 32 befindet sich die Sensorplattform 4, welche am Kardanrahmen 32 um die rotatorische Achse A drehbar gelagert ist. Bei dieser Ausführungsform wird das Bauvolumen um den Schwerpunkt 8 des Systems uneingeschränkt für die Unterbringung der Sensorplattform 4 genutzt. Auch in diesem Fall ist die Sensorplattform 4 als Schwerependel ausgebildet, wobei sie sich in einem schwach stabilen, nahezu indifferenten Gleichgewicht befindet. Dies ist darauf zurückzuführen, daß der Angriffspunkt 5 der Drehlagerung 6 um ein geringes Maß 7 oberhalb des Schwerpunktes 8 der Sensorpalttform 4 angeordnet ist.

Damit ist die Sensorplattform 4 im Kardanrahmen 32 um die horizontale Achse A neigbar, und dieser Kardanrahmen 32 ist wiederum im Kardanrahmen 31 um die dazu senkrechte, horizontale Achse B neigbar. Der Kardanrahmen 31 ist an seiner Oberseite mittels des Drehlagers 33 um die vertikale, rotatorische Achse C drehbar gelagert. Insgesamt gesehen, ist also die Sensorplattform 4 entlang der Doppelpfeile F, G und H dreh- bzw. schwenkbar, so daß das Suchfeld 37 des beispielsweise als Luftbildkamera ausgebildeten Sensors 2 entlang der Pfeile I, K führbar ist.

Der feste Wellenteil 40 des Drehlagers 33 ist um den Aufhängungspunkt 41 zweiachsig neigbar, so daß die gesamte Kardanaufhängung 30 mit der Sensorplattform 4 ein zusätzliches physikalisches Schwerependel bildet, das am Aufhängungspunkt 41 aufgehängt ist und um die jeweilige Lot- bzw. Scheinlotrichtung gemäß den Bewegungsfreiheitsgraden in Richtung der Pfeile I, K schwingen kann. Der Aufhängungspunkt 41 liegt auf der Drehachse des Drehlagers 33 und damit auf der rotatorischen Achse C.

Somit ist die Vorrichtung 1 gemäß Fig. 3 in zweifacher Hinsicht als Schwerependel ausgebildet, nämlich einmal in bezug auf die Sensorplattform 4 und die Kardanaufhängung 30 und zum zweiten hinsichtlich der gesamten Einheit Sensorplattform 4/Kardanaufhängung 30 in bezug auf den Trägerholm 34 des Fahrzeugs 3. Wie erwähnt, liegt der Angriffspunkt 5 in dem Schnittpunkt der drei rotatorischen Achsen A, B und C, der Schwerpunkt 8 der Sensorplattform jedoch um ein geringes Maß 7 unterhalb des Angriffspunktes 5.

Gemäß einer bevorzugten Weiterbildung der Erfindung ist der Aufhängungspunkt 41 des zusätzlichen Schwerependels über ein dreiachsiges Dämpfungselement 42 mit dem Fahrzeug 3 verbunden. Dieses Dämpfungselement 42 ist beispielsweise aus einem elastischen Volumenmaterial, wie zum Beispiel Schaumstoff, gefertigt. Diese Ausgestaltung der Erfindung nutzt den Umstand, daß vielfach in Fahrzeugen hinsichtlich der Bewegungen starke Unterschiede in den Drehungen um die horizontalen Achsen A, B (Nick- und Rollbewegungen) und der Drehung um die vertikale Achse C (Azimutbewegung) dahingehend bestehen, daß die Nick- und Rollbewegungen höhere Frequenzanteile enthalten als die Azimutbewegungen. Für die damit ruhigeren Azimutbewegungen (Bewegungen um die vertikale Achse C) kann deshalb in vielen Anwendungsfällen der passiv inertial stabilisierten Sensorplattform auf die mechanisch aufwendige Anordnung einer momentenfreien Aufhängung um die vertikale Achse C verzichtet und stattdessen eine konventionelle Drehlagerung, beispielsweise mit konventionellem Stellantrieb, eingesetzt werden.

Dabei läßt sich durch geeignete Auslegung der Drehlagerung 33 sowohl eine winkelbeschränkte als auch eine unbeschränkte, d.h. beliebig viele Umdrehungen in jeder Drehrichtung gestattende Bewegungsfreiheit der Sensorplattform um die verikale Achse C des Fahrzeugs 3 realisieren. Für den Einsatz der Sensorplattform 4 als Träger des als Luftbildkamera ausgebildeten Sensors 2 in als Fluggerät ausgebildetem Fahrzeug 3 kann durch die unbeschränkte Bewegungsfreiheit und entsprechende motorische Nachführung eine vom Fluggerätekurs unabhängige Luftbildorientierung, z.B. eine stets in Nordrichtung weisende Orientierung, realisiert werden.

Gemäß der in Fig. 3 gezeigten Ausführungsform der Erfindung sind die Momentengeber 22, 23 als Kombination aus Stellungsgebern 43, 44 und elastischen Kopplungselementen 45, 46 ausgebildet. Damit erfolgt die Schwenkbewegung der Sensorplattform um die beiden horizontalen Achsen A, B durch elastisch gekoppelte Momentengeber, welche in dem gezeigten Ausführungsbeispiel durch sogenannte drehende Positionsservos mit Stellhebeln über elastische Züge auf Stellhebel um die Achsen A, B wirken und dadurch Momente entsprechend der Winkelstellungsdifferenz der Stellhebel ausüben. Ein Verstellen der Stellungsgeber 43, 44 mittels der Momentengeber 22, 23 bewirkt also über die elastischen Kopplungselemente 45, 46 ein Verstellen der Stellhebel 47, 48 und damit eine Schwenkbewegung der Sensorplattform 4 um eine oder um beide Achsen A, B. Winkelstellungsgeber 50, 51, welche um die rotatorischen Achsen A, B an den Kardanrahmen 32 und 31 angeordnet sind, ermitteln die Winkelstellungen der Kardanaufhängung 30.

Die Ansteuerung der vorgenannten Momentengeber 22, 23 erfolgt über ein elektronisches Steuerwerk 52, das in Fig. 3 auf der rechten äußeren, vertikalen Mantelfläche 53 der Sensorplattform 4 befestigt ist. Das Steuerwerk 52 verarbeitet die Signale von auf der Sensorplattform fest montierten Raumlage- und Winkelgeschwindigkeitsensoren 54 sowie der Winkelstellungsgeber 50, 51 zu Stellbefehlen für die Momentengeber 22 und 23, welche, wie zuvor erwähnt, beispielsweise als sogenannte Positionsservos ausgebildet sind. Dabei handelt es sich um eine aperiodische Nachfolge der Raumlage der Sensorplattform 4, beispielsweise nach extern vorgegebenen Sollwertverläufen. Gemäß Fig. 3 sind die Raumlage- und Winkelgeschwindigkeitssensoren 54 auf der Oberseite 55 der Sensorplattform befestigt.

Bei driftbehafteten Raumlagesensoren 54, wie zum Beispiel bei Lagekreiseln oder integrierenden Drehsensoren, ist die Pendellage des Gesamtsystems aus Sensorplattform 4 und Kardanaufhängung 30 als Raumlagereferenz nutzbar, da sich diese Pendellage stets am momentanen Scheinlot orientiert, dessen Raumlage aus der Bahnbewegung des Fahrzeuges 3 berechnet werden kann. Auf Grund der ausbalancierten, schwerpunktnahen Aufhängung der Sensorplattform 4 verändert sich diese Pendellage nicht oder nahezu nicht infolge von Schwenkbewegungen der Sensorplattform 4 um die rotatorischen Achsen A und B.

Es wird darauf hingewiesen, daß das Drehlager 33 eine beispielsweise elektrisch betätigbare Drehvorrichtung enthalten kann.

In der in Fig. 3 gezeigten Ausführungsform wird das Trägheitsmoment des kompakt und zentral angeordneten Sensors 2, beispielsweise der Luftbildkamera, als inertial stabilisierende Masse der Sensorplattform 4 mitgenutzt.

Mit Hilfe der erfindungsgemäßen Vorrichtung 1 ist deshalb ein besonders wirtschaftliches Betreiben der Sensorplattform möglich.

## Patentansprüche

1. Vorrichtung zum Raumlage-Stabilisieren von Sensoren (2), insbesondere abbildenden Sensoren, in Fahrzeugen (3),
mit einer wenigstens einen Sensor (2) aufweisenden Sensorplattform (4), welche frei um alle drei, jeweils einen Winkel von 90° einschließenden, rotatorischen Achsen (A., B, C) drehbar gelagert ist (dreiachsige Drehlagerung 6),
**dadurch gekennzeichnet, daß**
die Sensorplattform (4) schwerpunktnah als Schwerependel derart gelagert ist, daß sie sich in einem schwach stabilen, nahezu indifferenten Gleichgewicht befindet.

2. Vorrichtung nach Anspruch 1, **dadurch gekennzeichnet, daß** der allen drei rotatorischen Achsen (A, B, C) gemeinsame Angriffspunkt (5) der Drehlagerung (6) an der Sensorplattform (4) um ein geringes Maß (7) außerhalb, vorzugsweise oberhalb oder unterhalb, des Schwerpunktes (8) der Sensorplattform (4) liegt.

3. Vorrichtung nach Anspruch 1 oder 2, **dadurch gekennzeichnet, daß** die dreiachsige Drehlagerung (6) der Sensorplattform (4) als Innenrahmensystem in Form eines zentralen Gelenks (10), vorzugsweise eines Kardan- oder Kugelgelenks, oder als Außenrahmensystem in Form einer außen um die Sensorplattform (4) herum angeordneten Kardanaufhängung (30) ausgebildet ist.

4. Vorrichtung nach einem der vorhergehenden Ansprüche, **dadurch gekennzeichent, daß** die Sensorplattform (4) eine rotierende, rotationssymmetrische Schwungmasse (12) hat, deren Rotationsachse (13) eine konstante Lage in bezug auf die Sensorplattform (4) aufweist.

5. Vorrichtung nach einem der vorhergehenden Ansprüche, **dadurch gekennzeichnet, daß** zum Herbeiführen oder Kompensieren von Drehbewegungen der Sensorplattform (4) um eine oder mehrere der drei Achsen (A, B, C) Momentengeber (22, 23, 24) vorgesehen sind, die im Ruhezustand keine Drehmomente auf die Sensorplattform (4) ausüben.

6. Vorrichtung nach einem der vorhergehenden Ansprüche, **dadurch gekennzeichnet, daß** zur Messung der Relativlage der Sensorplattform (4) gegenüber dem Fahrzeug (3) Winkelsensoren vorgesehen sind.

7. Vorrichtung nach den Ansprüchen 5 und 6, **dadurch gekennzeichnet, daß** Momentengeber (22, 23, 24) und Winkelsensoren berührungsfrei, vorzugsweise elektrodynamisch arbeitend ausgebildet sind.

8. Vorrichtung zumindest nach Anspruch 5, **dadurch gekennzeichnet, daß** die Momentengeber (22, 23, 24) jeweils als elektromagnetisches System, vorzugsweise mit am Fahrzeug (3) befestigter, etwa kreisringsegmentförmiger Elektromagnetenreihe (25, 26, 27) und dieser gegenüberliegendem, an der Sensorplattform (4) befestigtem, weichmagnetischem Material (17), ausgebildet sind.

9. Vorrichtung nach Anspruch 8, **dadurch gekennzeichnet, daß** die Momentengeber (22, 23, 24) über die Messung der elektromagnetischen Induktivitäten im zeitlichen Wechsel auch als elektromagnetische Winkelsensoren einsetzbar sind.

10. Vorrichtung nach einem der Ansprüche 5 bis 7, **dadurch gekennzeichnet, daß** die Momentengeber (22, 23) als Kombination aus Stellungsgebern (43, 44) und elastischen Kopplungselementen (45, 46) ausgebildet sind.

11. Vorrichtung nach einem der vorhergehenden Ansprüche, **dadurch gekennzeichnet, daß** an der Sensorplattform (4) Raumlage- und Winkelgeschwindigkeitssensoren (54) befestigt sind.

12. Vorrichtung zumindest nach Anspruch 3, **dadurch gekennzeichnet, daß** die Kardanaufhängung (30) mehrere Kardanrahmen (31, 32) und ein Drehlager (33) aufweist, mit dessen Hilfe die Kardanrahmen (31, 32) am Fahrzeug (3) befestigt sind.

13. Vorrichtung zumindest nach Anspruch 3 oder 12, **dadurch gekennzeichnet, daß** die Kardanaufhängung (30) als zusätzliches Schwerependel ausgebildet ist.

14. Vorrichtung nach Anspruch 13, **dadurch gekennzeichnet, daß** der Aufhängungspunkt (41) des zusätzlichen Schwerependels über ein dreiachsiges Dämpfungselement (42) mit dem Fahrzeug (3) verbunden ist.
